# EUROPÄISCHE PATENTANMELDUNG

(11) **EP 2 757 127 A1**
(43) Veröffentlichungstag der Anmeldung: **23.07.2014**
(21) Anmeldenummer: 13152079.3
(22) Anmeldetag: 21.01.2013
(51) Int. Cl.: C08K 5/13, C08L 13/00

(54) **Vernetzung von carboxylierten Nitrilkautschuken mit resolhaltigen Vernetzungssystemen**

(71) Anmelder: LANXESS Deutschland GmbH, 50569 Köln (DE)
(72) Erfinder: Magg, Hans, 51515 Kürten (DE); Welle, Achim, Leverkusen 51375 (DE)

(57) **Zusammenfassung**

Die Erfindung betrifft vulkanisierbare Zusammensetzungen auf Basis carboxylierter Nitrilkautschuke, mindestens einem Resol-Vernetzer, mindestens einem silikatischen Füllstoff und mindestens einem speziellen Silan, ein Verfahren zur Herstellung dieser vulkanisierbaren Zusammensetzungen, ein Verfahren zur Herstellung von Vulkanisaten daraus und die so erhaltenen Vulkanisate. Die Vulkanisate zeichnen sich durch gute mechanische und dynamische Eigenschaften und einen exzellenten Compression Set aus.

## Beschreibung

Die Erfindung betrifft vulkanisierbare Zusammensetzungen auf Basis von carboxylierten Nitrilkautschuken, Resol-Vernetzern, mineralischen Füllstoffen und speziellen Additiven, ein Verfahren zur Herstellung dieser vulkanisierbaren Zusammensetzungen, ein Verfahren zur Herstellung von Vulkanisaten daraus und die so erhaltenen Vulkanisate.

Unter Nitrilkautschuken, abgekürzt oft auch als "NBR" bezeichnet, werden Kautschuke verstanden, bei denen es sich um Co- oder Terpolymere aus mindestens einem α,β-ungesättigten Nitril, mindestens einem konjugierten Dien und gegebenenfalls einem oder mehreren weiteren copolymerisierbaren Monomeren handelt. Unter hydrierten Nitrilkautschuken ("HNBR") werden entsprechende Co- oder Terpolymere verstanden, bei denen die C=C-Doppelbindungen der einpolymerisierten Dieneinheiten ganz oder teilweise hydriert sind.

Sowohl NBR als auch HNBR nehmen seit vielen Jahren einen festen Platz im Bereich der Spezialelastomere ein. Sie verfügen über ein ausgezeichnetes Eigenschaftsprofil in Form einer ausgezeichneten Ölbeständigkeit, einer guten Hitzebeständigkeit, einer hervorragenden Beständigkeit gegen Ozon und Chemikalien, wobei letztere im Fall des HNBR noch ausgeprägter als beim NBR sind. NBR und HNBR weisen ferner sehr gute mechanische sowie anwendungstechnische Eigenschaften auf. Aus diesem Grund finden sie breite Verwendung in den verschiedensten Anwendungsgebieten und werden beispielsweise eingesetzt zur Herstellung von Dichtungen, Schläuchen, Riemen und Dämpfungselementen im Automobilsektor, ferner für Statoren, Bohrlochdichtungen und Ventildichtungen im Bereich der Ölförderung sowie auch für zahlreiche Teile der Elektroindustrie, des Maschinen- und Schiffsbaus. Kommerziell erhältlich sind eine Vielzahl unterschiedlicher Typen, die sich je nach Anwendungsbereich durch unterschiedliche Monomere, Molekulargewichte, Polydispersitäten sowie mechanische und physikalische Eigenschaften auszeichnen. Neben den Standardtypen werden vor allem Spezialtypen, die sich durch Gehalte spezieller Termonomere oder besondere Funktionalisierungen zunehmend nachgefragt.

Der Markt von carboxyliertem Nitrilkautschuk (abgekürzt auch als "XNBR" bezeichnet), einem Terpolymer auf Basis mindestens eines α,β-ungesättigten Nitrils, mindestens eines konjugierten Diens und mindestens einem carboxylgruppenhaltigen Monomer bei technischen Gummiartikeln liegt traditionell in den Bereichen industrielle Antriebstechnik, Fördertechnik, Textilindustrie, Dichtungen im Automobil- und industriellen Bereich und anderen Spezialanwendungen.

Die besonderen Eigenschaften von XNBR wie
- ein sehr geringer Abrieb und eine gute Verschleißfestigkeit,
- ausgezeichnete Vulkanisateigenschaften in Bezug Festigkeit und Spannungswerte,
- eine exzellente Bindung an polare Substrate infolge einer möglichen Reaktion des Substrates mit der Carboxylgruppe des Termonomers und
- die ebenfalls auf die Wiederholungseinheiten des carboxylgruppenhaltigen Termonomers zurückzuführende Hydrophilie,
ermöglichen seit Jahren die Abdeckung einiger wichtige Anwendungsgebiete durch XNBR.

Einer breiteren Diversifizierung sind bisher jedoch Grenzen gesetzt, zum einen bedingt durch den höheren Rohstoffpreis von XNBR gegenüber NBR und zum anderen bedingt durch die bisher unverzichtbare Verwendung eines Vernetzungssystems aus Metalloxid und einem üblichen Schwefelsystem, um Vulkanisate mit einem brauchbaren Eigenschaftsbild zu erhalten. Metalloxide wie insbesondere Zinkoxid sind jedoch umwelttoxische Stoffe und daher im Prinzip unerwünscht.

Das Vernetzungssystem aus Metalloxid und Schwefel oder einem Schwefellieferanten ermöglichen die Vulkanisation unter Einbeziehung der Carboxylgruppen der Termonomer-Wiederholungseinheiten und der Doppelbindung in der Polymerkette, allerdings
- genügt die Verarbeitungssicherheit oft nicht den Anforderungen moderner Prozessführung und die Handhabung der vulkanisierbaren Mischung ist schwierig und kann mit zusätzlichen Kosten verbunden sein und
- die thermische Stabilität inbesondere in Bezug auf die Druckverformungseigenschaften und die Beständigkeit gegen Wärmealterung sind aufgrund des verwendeten Metalloxids vor allem bei hohen Temperaturen deutlich geringer als bei Nitrilkautschuk.

Die bevorzugte Verwendung einer Kombination aus Zinkoxid und Schwefel als Vernetzungssystem für XNBR wird in Rubber Chemistry and Technology 30 (1957), 1347 beschrieben. Eine in Macromolecules, Vol. 3, No. 2, 147 (1970**)** als "clusterartige" Vernetzung bezeichnete Reaktion der dispergierten Zinkoxidteilchen mit den Carboxylgruppen der Termonomer-Wiederholungseinheiten im XNBR wurde als wesentliche Ursache für viele der genannten exzellenten Eigenschaften erkannt, führt jedoch auch zu den oben erwähnten Problemen.

In Kautschuk, Gummi, Kunststoffe 53, 415 (2000**)** wird ausgeführt, dass eine gewisse Verbesserung in Bezug auf die Verarbeitung durch Verwendung von Zinkperoxid anstatt von Zinkoxid ermöglicht wird. Diese Variante stellt jedoch wegen der mit diesem Produkt verbundenen Handhabungs- und Verfügbarkeitsprobleme und der weiterhin bestehenden Schwäche in Bezug auf die Vulkanisateigenschaften keine in Summe zufriedenstellende Lösung dar.

Es wurde daher nach Problemlösungen gesucht, die ohne Metalloxid als Teil des Vernetzungssystems auskommen.

Dafür hat es in der Vergangenheit unterschiedliche Ansätze gegeben. Als Beispiele sind Vernetzungssysteme basierend auf Diaminen, Di-Epoxiden (Diglycidylether von Bisphenol A) wie sie in der Fertigung von Epoxidharzen eingesetzt werden, Carbodiimiden, geblockte Isocyanate und, wie in Journal of Applied Polymer Science, 80,1925 (2001**)** beschrieben, Thiophosphorylpolysulfide zu nennen. Alle diese Verfahren wirken aber einseitig, entweder durch Reaktion mit der Carboxylgruppe des Termonomeren oder durch Reaktion mit der Doppelbindung des konjugierten Dien-Monomers, zeigen Nachteile verschiedener Art und sind deshalb in der Praxis bislang ohne wesentliche technische Bedeutung geblieben.

Wie in **GAK 8/2007, Jahrg.60, S. 494ff.** von **D.Schneegans, R.Gattringer und R.Bauer** ausgeführt wurde, hat nur der Einsatz von Peroxiden in der sogenannten "2K Technologie" eine gewisse Bedeutung gewonnen.

Im Buch **"**Vulkanisation & Vulkanisationshilfsmittel" von Werner Hofmann ist in der Ausgabe von 1965 bereits die Harzvernetzung für carboxylierte Nitrilkautschuke erwähnt. Weitere Entwicklungen und Veröffentlichungen mit dem Ziel, diese Harzvernetzung in die technische Praxis einzuführen, sind nicht bekannt.

Die **Aufgabe der vorliegenden Erfindung** bestand somit darin, vulkanisierbare Mischungen basierend auf carboxylgruppenhaltigen Nitrilkautschuken bereitzustellen, die bei der Verarbeitung eine ausreichende Verarbeitungssicherheit aufweisen, sich somit leicht handhaben lassen, und ferner über eine hohe thermische Stabilität inbesondere in Bezug auf die Druckverformungseigenschaften und die Beständigkeit gegen Wärmealterung verfügen.

**Gelöst wurde diese Aufgabe** durch den Einsatz eines Resols als Vernetzer in Gegenwart mindestens eines silikatischen Füllstoffs und mindestens eines speziellen Silans.

**Gegenstand der Erfindung** sind somit vulkanisierbare Zusammensetzungen enthaltend
(1) einen Nitrilkautschuk mit Wiederholungseinheiten mindestens eines konjugierten Diens, mindestens eines α,β-ungesättigten Nitrils und mindestens eines carboxylgruppenhaltigen, copolymerisierbaren Termonomers,
(2) mindestens ein Resol,
(3) mindestens einen silikatischen Füllstoff und mindestens ein Silan der allgemeinen Formel (I) 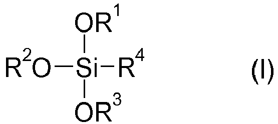 worin
   - R¹, R² und R³: gleich oder verschieden sind und geradkettige oder verzweigte C₁-C₂₅-Alkylreste oder R⁴-C(=O)-, wobei R⁴ für geradkettiges oder verzweigtes C₁-C₂₅-Alkyl steht, bedeuten und
   - R⁴: für geradkettige oder verzweigte C₁-C₁₄-Alkylreste steht, die keinen, einen, zwei oder mehrere Substituenten ausgewählt aus Vinyl, -SH, substituiertem oder unsubstituiertem Phenyl, Methacryloxy-, und Isocyanatoaufweisen, oder
   für -R⁵-(S)ₓ-R⁵-Si(OR¹)(OR²)(OR³) steht, worin R¹, R² und R³ gleich oder verschieden sind und die gleichen Bedeutungen wie in Formel (I) besitzen, R⁵ für einen geradkettigen oder verzweigten C₁-C₁₄-Alkylenrest und x für eine Zahl von 1 bis 8 steht,
oder alternativ einen, bereits mit einem Silan modifizierten silikatischen Füllstoff.

**Gegenstand der Erfindung** ist ferner ein Verfahren zur Herstellung dieser vulkanisierbaren Mischungen durch Mischen der Komponenten (1), (2) und (3).

**Gegenstand der Erfindung** ist ferner ein Verfahren zur Herstellung von Vulkanisaten, indem man die vulkanisierbare Mischung bevorzugt bei erhöhter Temperatur einer Vulkanisation unterzieht.

**Gegenstand der Erfindung** sind ferner Vulkanisate, die durch Vulkanisation der erfindungsgemäßen Mischung erhältlich sind.

### Vorteile:

Die erfindungsgemäßen vulkanisierbaren Zusammensetzungen zeichnen sich gegenüber Zusammensetzungen auf Basis von Zinkoxid/Schwefel Vernetzersystemen durch ein deutlich verbessertes Verarbeitungsverhalten aus. Ferner zeigen die durch Vulkanisation aus den erfindungsgemäßen vulkanisierbaren Zusammensetzungen erhaltenen Vulkanisate zum einen das Eigenschaftsbild der durch Zinkoxid/Schwefel Vernetzung erhaltenen Produkte, soweit positiv, und zum anderen weisen sie darüber hinaus wesentlich bessere Druckverformungseigenschaften, sprich einen niedrigeren compression set auf.

Im Vergleich zu den bisher üblichen Vernetzungssystem aus Zinkoxiden und schwefelbasierten Vernetzern bietet der Einsatz der Resole als Vernetzer in Kombination mit einem Silan sowie dem silikatischen Füllstoff eine Reihe von Vorteilen sowohl im Hinblick auf die Verfahrenstechnik, das Verarbeitungsverhalten als auch die Eigenschaften der daraus hergestellten Vulkanisate in Form unterschiedlichster Gummiartikel:
- **Einzusetzende Rohstoffe**: Die vulkanisierbaren Zusammensetzungen gemäß der vorliegenden Erfindung zeichnen sich dadurch aus, dass der Einsatz umweltschädlicher Vernetzungsagentien wie Zinkoxid und ferner der Einsatz von Schwefel oder Schwefel liefernden Verbindungen als Teil des Vernetzersystems nicht mehr erforderlich ist. Durch den Einsatz von Resolen werden ausschließlich stabile, kovalente Vernetzungsbrücken gebildet.
- **Verfahrenstechnik**: Die Mischungsviskosität ist um bis zu 30 % vermindert. Dadurch ist die Fließfähigkeit der Mischung bedeutend verbessert. Durch den Rheovulkametertest bei 180 °C konnte ermittelt werden, dass die Fließfähigkeit um bis zu 100% verbessert ist. Die aus den erfindungsgemäßen Zusammensetzungen hergestellten Mischungsfelle sind glatter, die Spritzquellung und auch der Kalanderschrumpf ist geringer. Die Mischungen sind somit für die Herstellung von Formartikeln über ein Spritzgussverfahren geeignet. Die Extrusion, etwa für Schläuche und die Verarbeitung auf dem Kalander bzw. einer Roller Head Anlage für Folien und Gewebebelegung wird ebenfalls verbessert. Diese Vorteile führen zu einem wesentlichen und von jedem Verarbeiter je nach Bedingungen nutzbaren Kostenvorteil.
- **Mischungslogistik**: Vulkanisationsfähig eingestellte Mischungen mit Zinkoxid gemäß dem Stand der Technik sind oft nur von sehr begrenzter Lagerbeständigkeit. Sofern zur Verbesserung Zinkperoxid verwendet wird, ist sogar besondere Vorsicht nötig. Die erfindungsgemäßen vulkanisierbaren Zusammensetzungen zeigen dagegen eine deutlich verbesserte Lagerbeständigkeit Bedingungen wie zum Beispiel Vulkanisationstests nach dreitägiger Lagerung bei 40 °C, entsprechend einem Shelf-Life von ca. 10 Tagen bei Raumtemperatur sind bei vernünftigem Compounding gut erfüllbar. Dadurch kann in kritischen Fällen die Produktionsplanung verbessert und die Menge der durch zu lange Lagerung zu verwerfenden Mischungen vermindert werden.
- **Vulkanisateigenschaften: Zug-Dehnungseigenschaften**: Hohe Spannungswerte bei vorgegebener Härte gehören zu den wesentlichen Eigenschaften von Elastomeren auf Basis carboxyl-gruppenhaltiger Nitrilkautschuke. Diese Eigenschaften werden gemäß dem Stand der Technik zum einen nur bei Polymeren mit hohem Carboxylgruppengehalt und zum anderen mit der Konsequenz erzielt, dass die zwangsläufige "clusterartige" Vernetzung von Zinkoxid mit den Carboxylgruppen unter Spannung geringen Widerstand gegen Relaxation zeigt. Daher sind mit Zinkoxid/Schwefel vernetzte Vulkanisate auf Basis carboxylgruppenhaltiger Nitrilkautschuke als Dichtwerkstoff für die heutige industrielle Anforderungen nur in Sonderfällen üblich.
   Bei Verwendung der erfindungsgemäßen Mischungen kann dagegen der CarboxylgruppenGehalt in einem deutlich breiteren Bereich gewählt werden. Mit Resol in Gegenwart von Silan und silikatischem Füllstoff vernetzte carboxylgruppenhaltige Nitrilkautschuke führen auch bereits bei sehr geringen Carboxylgruppen-Gehalten von nur 1 % oder weniger zu Vulkanisaten mit exzellenten Eigenschaften und insbesondere Druckverformungsresten von ca. 35 % bei 340 h/100°C Dauerbelastung. Dieser Wert beträgt nur etwa die Hälfte des Wertes, der mit einem Zinkoxid/Schwefel vernetzten Vulkanisat erzielt wird.
- **Vulkanisateigenschaften - Tieftemperatur-/Quellungsverhalten:** Bei der Venetzung gemäß dem Stand der Technik mit der Zinkoxid/Schwefel-Kombination werden die gewünschten Vulkanisateigenschaften nur mit Polymeren erreicht, deren CarboxylgruppenGehalt hoch ist und der Acrylnitrilgehalt entsprechend tiefer liegt. Um ausreichende Tieftemperatur-eigenschaften wie bei einem Copolymer mit z.B. 33 % Acrylnitril zu erreichen, muss der Acrylnitrilgehalt z.B. auf ca. 28 % eingestellt werden. Dies hat eine im Vergleich zu Nitrilkautschuk-Typen mit 33 % Acrylnitril höhere Quellung in unpolaren Medien zur Folge. Da wie oben beschrieben bereits bei nur sehr geringen Carboxylgruppen-Gehalten Vulkanisate mit exzellenten mechanischen Eigenschaften im Sinne des typischen XNBR Erscheinungsbilds erhalten werden, folgt daraus, dass der Acrylnitril-Gehalt hoch ist/bleiben kann und somit weiterhin im Gegensatz zu den Vulkanisaten des Standes der Technik exzellente Quellungseigenschaften bei noch ausreichender Glastemperatur gegeben ist.

Zusätzlich zu den oben genannten Vorteilen bleibt auch die beim Vernetzungssystem Zinkoxid/Schwefel vorhandene positive sogenannte "duale" Wirkung der Vernetzung erhalten. Unter Einsatz des Resols kommt es sowohl zur Vernetzung über die Doppelbindungen in der Polymerhauptkette des carboxylierten Nitrilkautschuks zu Oxa-Cyclohexan Derivaten als auch über die Carboxylgruppen durch Veresterung mit den Hydroxygruppen des Resols und über die zu den Nitrilgruppen cc-ständigen Wasserstoffatome zu Ethern. Da die Resole mindestens bifunktionell sind werden dabei kovalente Vernetzungsbrücken gebildet, die thermisch und oxidativ stabiler als ZnO-Cluster und Schwefelbrücken sind. Im Vergleich zu der herkömmlichen Vernetzung mit ZnO/Schwefel Systemen ergeben sich bei der Vulkanisation der erfindungsgemäßen Mischungen Vulkanisate mit besserer Beständigkeit - zum Beispiel in Bezug auf den Druckverformungsrest bei höheren Temperaturen. Da die thermisch-oxidative Beständigkeit durch die Doppelbindungen in der Polymerkette wesentlich bestimmt wird, liegt diese auf dem Niveau der üblichen Nitrilkautschuk-Vulkanisate.

Dass diese Verbesserungen erzielt werden können in einer vulkanisierbaren Mischung, die neben dem Resol als Vernetzer auch einen silikatischen Füllstoff enthält, ist überraschend, da man die Verwendung silikatischer Füllstoffe zu komplexen Verhältnissen führen kann, da neben der erwünschten Wechselwirkung des Resols mit der Carbonsäure ferner eine unerwünschte Wechselwirkung des Resols mit der Kieselsäure in Form einer unerwünschten Pfropfung des Resols und einer dadurch bedingten Deaktivierung des Resols eintreten kann. Ferner kann auch eine Wechselwirkung der Kieselsäure mit dem XNBR über Wasserstoffbrückenbindungen zu unerwünschten Effekten führen. Durch Zusatz des speziellen Silans gelingt es jedoch, diese unerwünschten Nebeneffekte zu vermeiden.

### Carboxylgruppenhaltige Nitrilkautschuke (Komponente 1):

Bei den carboxylgruppenhaltigen Nitrilkautschuken, die in der erfindungsgemäßen vulkanisierbaren Zusammensetzung zum Einsatz gelangen, handelt es sich um Terpolymere mit Wiederholungseinheiten abgeleitet mindestens einem konjugierten Dien, mindestens einem α,β-ungesättigten Nitril, und mindestens einem carboxylgruppenhaltigen, copolymerisierbaren Termonomer. Sie werden im Rahmen dieser Anmeldung auch mit "XNBR" abgekürzt.

Das **konjugierte Dien** kann von jeder Natur sein. Bevorzugt werden (C₄-C₆) konjugierte Diene eingesetzt. Besonders bevorzugt sind 1,2-Butadien, 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als **α,β-ungesättigtes Nitril** kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Bevorzugt enthält der carboxylgruppenhaltige Nitrilkautschuk Wiederholungseinheiten abgeleitet mindestens einem (C₄-C₆) konjugierten Dien, bevorzugt 1,2-Butadien, 1,3-Butadien, Isopren, 2,3-Dimethylbutadien, Piperylen oder Gemischen daraus enthält und Wiederholungseinheiten von mindestens einem (C₃-C₅)-α,β-ungesättigten Nitril, bevorzugt Acrylnitril, Methacrylnitril, Ethacrylnitril oder Mischungen davon.

Als **carboxylgruppenhaltige, copolymerisierbare Termonomere** können α,β-ungesättigte Monocarbonsäuren, α,β-ungesättigte Dicarbonsäuren, Anhydride α,β-ungesättigter Dicarbonsäuren und Monester α,β-ungesättigter Dicarbonsäuren eingesetzt werden.

Als **α,β-ungesättigte Monocarbonsäuren** können bevorzugt Acrylsäure und Methacrylsäure eingesetzt werden.

Als **α,β-ungesättigte Dicarbonsäuren** sind Maleinsäure, Fumarsäure, Crotonsäure, Itaconsäure, Citraconsäure und Mesaconsäure bevorzugt.

Eingesetzt werden können ferner **Anhydride α,β-ungesättigter Dicarbonsäuren**, bevorzugt Maleinsäureanhydrid, Itaconsäureanhydrid, Citraconsäureanhydrid und Mesaconsäureanhydrid.

Eingesetzt werden können ferner **Monoester von α,β-ungesättigten Dicarbonsäuren**.

Bei diesen **Monoestern α,β-ungesättigter Dicarbonsäuren** kann es sich beispielsweise handeln um **Alkyl-**, bevorzugt C₁-C₁₀-Alkyl, insbesondere Ethyl-, n-Propyl-, iso-Propyl, n-Butyl-, tert.-Butyl, n-Pentyl- oder n-Hexyl-, **Alkoxyalkyl-**, bevorzugt C₂-C₁₂ Alkoxyalkyl-, besonders bevorzugt C₃-C₈- Alkoxyalkyl, **Hydroxyalkyl**, bevorzugt C₁-C₁₂ Hydroxyalkyl-, besonders bevorzugt C₂-C₈- Hydroxyalkyl, **Cycloalkyl-**, bevorzugt C₅-C₁₂-Cycloalkyl-, besonders bevorzugt C₆-C₁₂-Cycloalkyl, **Alkylcycloalkyl-**, bevorzugt C₆-C₁₂-Alkylcycloalkyl-, besonders bevorzugt C₇-C₁₀-Alkylcycloalkyl, **Aryl-**, bevorzugt C₆-C₁₄-Aryl-Monoester.

Beispiele von **α,β-ungesättigten Dicarbonsäuremonoestern** umfassen
- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropyl itaconat und Mono-n-butyl itaconat;
- Itaconsäuremonocycloalkylester, bevorzugt Monocyclopentylitaconat, Monocyclohexyl itaconat und Monocyclo+heptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat.
- Mesaconsäuremonoalkylester, bevorzugt Mesaconsäuremonoethylester;

Der in den erfindungsgemäßen Zusammensetzungen eingesetzte carboxylgruppenhaltige Nitrilkautschuk enthält
- Wiederholungseinheiten mindestens eines **konjugierten Diens** in Mengen von 40 bis 89,9 Gew. %, vorzugsweise von 45 bis 84,8 Gew.%, besonders bevorzugt 49 bis 80 Gew.%,
- Wiederholungseinheiten mindestens eines **ungesättigten Nitrils** in Mengen von 10 bis 59,9 Gew.%, vorzugsweise von 19 bis 50 Gew. %, besonders bevorzugt und
- Wiederholungseinheiten mindestens eines **carboxygruppenhaltigen**, **copolymerisierbaren Termonomers** in Mengen von 0,1 bis 20 Gew. %, vorzugweise 0,4 bis 10 Gew. %, besonders bevorzugt 1 bis 8 Gew.% zugegen sein, wobei aller Wiederholungseinheiten 100 Gew.-% ergibt.

Derartige carboxylgruppenhaltige Nitrilkautschuke sind kommerziell erhältlich, z.B. unter der Marke Krynac^{®} der Lanxess Deutschland GmbH (z.B. Krynac® X 750 und Krynac® X 740 mit 7 Gew.% Carbonsäuremonomer; Krynac® X 146 mit 1 Gew.% Carbonsäuremonomer und Krynac ® X 160 mit 1 Gew.% Carbonsäuremonomer).

Alternativ sind derartige carboxylgruppenhaltige Nitrilkautschuke nach den dem Fachmann bekannten Methoden durch Terpolymerisation in Emulsion herstellbar.

### Resol (Komponente 2):

Die erfindungsgemäße Zusammensetzung enthält mindestens ein Resol. Typischerweise wird als Resol ein Harz auf Basis von p-Alkylphenolen verwendet. Erhältlich sind derartige Resole durch Kondensation der entsprechenden p-Alkylphenole mit Formaldehyd unter basischen Bedingungen.

Typischerweise enthält das Resol ein oder mehrere Verbindungen der allgemeinen Formel (I) 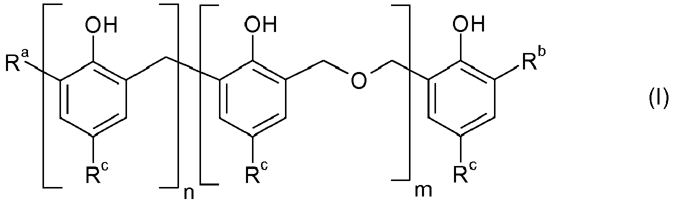 worin
- R^{a}: für H, -CH₃, -CH₂OH oder -CH₂Br steht,
- R^{b}: für -CH₂OH oder -CH₂Br steht und
- R^{c}: einen geradkettigen oder verzweigten C₁-C₁₅-Alkylrest darstellt und
n und m gleich oder verschieden sind und ganze Zahlen im Bereich von 0 bis 25 sind.

In einer bevorzugten Ausführungsform enthält das Resol ein oder mehrere Verbindungen der allgemeinen Formel (I) worin
- R^{a}: für H, -CH₃, -CH₂OH oder -CH₂Br steht,
- R^{b}: für -CH₂OH oder -CH₂Br steht und
- R^{c}: einen geradkettigen oder verzweigten C₄-C₈-Alkylrest darstellt und
n und m gleich oder verschieden sind und ganze Zahlen im Bereich von 0 bis 15 sind.

Besonders bevorzugt ist ein Resol, welches ein oder mehrere Verbindungen der allgemeinen Formel (I) enthält, worin
- R^{a}: für H, -CH₃, -CH₂OH oder -CH₂Br steht,
- R^{b}: für -CH₂OH oder -CH₂Br steht und
- R^{c}: einen tert. Octylrest oder tert. Butylrest darstellt und
n und m gleich oder verschieden sind und ganze Zahlen im Bereich von 0 bis 15 sind.

Insbesondere bevorzugt ist ein Resol, welches ein oder mehrere Verbindungen der allgemeinen Formel (I) enthält, worin
- R^{a}: für H oder -CH₂OH steht,
- R^{b}: für -CH₂OH steht und
- R^{c}: einen geradkettigen oder verzweigten C₄-C₈-Alkylrest darstellt, insbesondere einen tert. Octylrest und
n und m gleich oder verschieden sind und ganze Zahlen im Bereich von 0 bis 15 sind.

Die im Handel verfügbaren Resole enthalten üblicherweise 4-20 Gew.% Hydroxymethylgruppen bezogen auf das Gesamtgewicht des Resols. Sofern mit Brom modifizierte Resole verwendet werden und somit Verbindungen der allgemeinen Formel (I) enthalten, in denen R^{a} für -CH₂Br steht, so liegt der Bromgehalt des Resols üblicherweise im Bereich von 4-5 Gew.% bezogen auf das Gesamtgewicht des Resols. Resole der allgemeinen Formel (I) sind mit XNBR gut verträglich und sehr gut homogen dispergierbar, da die Schmelz- bzw. Erweichungstemperatur verhältnismäßig niedrig liegt.

Sofern nicht mit Brom modifizierte Resole eingesetzt werden, so hat es sich in einer bevorzugten Ausführungsform bewährt, in der erfindungsgemäßen Zusammensetzung zusätzlich halogenhaltige Additive als Aktivatoren einzusetzen, die jedoch nicht Derivate von mehrwertigen Metallen sein dürfen. Werden brommodifizierte Resole der Formel (I) eingesetzt, so ist dieser Zusatz halogenhaltiger Additive nicht nötig.

Die in den erfindungsgemäßen Zusammensetzungen einsetzbaren Resole sind kommerziell erhältlich, beispielsweise von Schenectady International, Inc. als SP 1045 oder SP 1055.

### Silikatischer Füllstoff und Silan (Komponente 3)

Als silikatische Füllstoffe können in den erfindungsgemäßen Zusammensetzungen eingesetzt werden:
- natürliche Silikate,
- synthetische Silikate,
- Kieselsäuren,
- Glasfasern, Glasfaserprodukte oder Mikroglaskugeln.

Bei den **natürlichen Silikaten** kann es sich beispielsweise um Kaolin, Talkum oder andere natürlich vorkommende Silikate handeln.

Bei den **synthetischen Silikaten** kann es sich beispielsweise um Aluminiumsilikate oder Erdalkalimetallsilikate wie Magnesium- oder Calciumsilikat handeln, bevorzugt mit einer BET Oberfläche von 20 - 400 m²/g und Primärteilchengröße von 10 - 400 nm.

Bei den **Kieselsäuren** kann es sich beispielsweise um Monokieselsäure (Orthokieselsäure) oder deren wasserärmeren Kondensate wie z.B. Dikieselsäure (Pyrokieselsäure) (HO)₃Si-O-Si(OH)₃ und Trikieselsäure (HO)₃Si-O-Si(OH)₂-O-Si(OH)₃ handeln.

In einer Ausführungsform werden durch Fällung von Silikat-Lösungen erhaltene, sogenannte gefällte oder durch Flammenhydrolyse von Siliziumhalogenden erhaltene, sogenannte pyrogene Kieselsäuren eingesetzt, deren spezifische BET Oberfläche nach ISO 9277 im Bereich von 5 bis 1000 m²/g, bevorzugt 20-500 m²/g und insbesondere im Bereich von 50 - 400 m²/g liegt. Sie besitzen üblicherweise Primärteilchengrößen von 10 - 400 nm. Die Kieselsäuren können gegebenenfalls auch als Mischoxide mit anderen Metalloxiden wie Al-, Mg-, Ca-, Ba-, Zn-, Zr-, Ti-Oxiden vorliegen.

Gegebenenfalls können auch hydrophobe silikatische Füllstoffe eingesetzt werden, die in der Literatur beschrieben (W.Mischel; Gummi Fasern Kunsstoffe,2/2007 ,S. 9) oder aber kommerziell verfügbar sind, z.B. von der Evonik Industries AG.

Die **Glasfaserprodukte** können beispielsweise in Matten- oder Strangform vorliegen.

Alle vorgenannten Typen silikatischer Füllstoffe sind kommerziell erhältlich.

In den erfindungsgemäßen Mischungen wird mindestens einen silikatischen Füllstoff und mindestens ein Silan der allgemeinen Formel (II) eingesetzt, 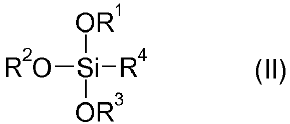 worin
- R¹, R² und R³: gleich oder verschieden sind und geradkettige oder verzweigte C₁-C₂₅ Alkylreste oder R⁴-C(=O)-, wobei R⁴ für einen geradkettigen oder verzweigten C₁-C₂₅-Alkylrest steht, bedeuten und
- R⁴: für geradkettige oder verzweigte C₁-C₁₄-Alkylreste steht, die keinen, einen, zwei oder mehrere Substituenten ausgewählt aus Vinyl-, -SH, substituiertem oder unsubstituiertem Phenyl-, Methacryloxy- und Isocyanato- aufweisen, oder für -R⁵-(S)ₓ-R⁵-Si(OR¹)(OR²)(OR³) steht, worin R¹, R² und R³ gleich oder verschieden sind und die gleichen Bedeutungen wie in Formel (II) besitzen, R⁵ für einen geradkettigen oder verzweigten C₁-C₁₄-Alkylenrest und x für eine Zahl von 1 bis 8 steht,
oder alternativ ein, bereits mit einem Silan modifizierter silikatischer Füllstoff.

In einer bevorzugten Ausführungsform wird mindestens ein silikatischer Füllstoff und mindestens ein Silan der allgemeinen Formel (II) eingesetzt, worin
- R¹, R² und R³: gleich oder verschieden sind und geradkettige oder verzweigte C₁-C₈-, insbesondere C₁-C₄-Alkylreste oder R⁴-C(=O)-, wobei R⁴ für einen geradkettigen oder verzweigten C₁-C₁₀-, insbesondere C₁-C₈-Alkylrest steht, bedeuten und
- R⁴: für geradkettige oder verzweigte C₁-C₁₀-Alkyl-, insbesondere C₁-C₈-Alkylreste steht, die keinen, einen, zwei oder mehrere Substituenten ausgewählt aus Vinyl-, -SH, substituiertem oder unsubstituiertem Phenyl-, Methacryloxy- und Isocyanato- aufweisen, oder für -R⁵-(S)ₓ-R⁵-Si(OR¹)(OR²)(OR³) steht, worin R¹, R² und R³ gleich oder verschieden sind und die gleichen Bedeutungen wie in Formel (II) besitzen, R⁵ für einen geradkettigen oder verzweigten C₁-C₅-Alkylenrest und x für eine Zahl von 1 bis 8 steht,
oder alternativ ein, bereits mit einem Silan der allgemeinen Formel (II), in dem R¹, R², R³ und R⁴ die oben genannten bevorzugten Bedeutungen haben, modifizierter silikatischer Füllstoff.

In einer besonders bevorzugten Ausführungsform wird mindestens ein silikatischer Füllstoff und mindestens ein Silan der allgemeinen Formel (II) eingesetzt, worin
- R¹, R² und R³: gleich oder verschieden sind, insbesondere gleich sind, und geradkettige oder verzweigte C₁-C₄-Alkylreste, insbesondere Methyl, Ethyl, n-Propyl oder i-Propyl, bedeuten und
- R⁴: für geradkettige oder verzweigte C₁-C₈-Alkylreste steht, die keinen, einen, zwei oder mehrere Substituenten ausgewählt aus Vinyl, -SH, substituiertem oder unsubstituiertem Phenyl, Methacryloxy-, und Isocyanato- aufweisen, oder für -R⁵-(S)ₓ-R⁵-Si(OR¹)(OR²)(OR³) steht, worin R¹, R² und R³ gleich oder verschieden sind und die gleichen Bedeutungen wie in Formel (I) besitzen, R⁵ für einen geradkettigen oder verzweigten C₁-C₃-Alkylenrest und x für eine Zahl von 2 bis 5 steht,

Insbesondere bevorzugte Silane sind Octyltriethoxysilan, Vinyltriethoxysilan und Bis(triethyoxsilylpropyl)oligosulfide, wobei di, tri oder Tetrasulfide (x = 2, 3, oder 4) insbesondere bevorzugt sind. Silane der allgemeinen Formel (II) sind käuflich erhältlich, z.B. aus der Produktpalette Dynasylan^{®} der Firma Evonik Industries AG. Auch Produkte für die alternative Ausführungsform, d.h. mit einem Silan modifizierte silikatische Füllstoffe sind käuflich erhältlich, z.B. einzelne Produkte aus den Produktpaletten Coupsil^{®} bzw. Aerosil^{®} der Firma Evonik Industries AG.

Versuche haben ergeben, dass Silane mit Amino- oder Glycidoxygruppen als funktionellen Gruppen, wie z.B. Dynasylan^{®} GLYEO (3-Glycidyloxypropyl-triethoxysilan) oder Dynasylan^{®} AMEO (3-Aminopropyl-triethoxysilan) wegen ihrer Reaktivität mit der Hydroxymethylengruppe des Resols für den Einsatz in der erfindungsgemäßen Zusammensetzung nicht geeignet sind. Wesentlich ist, dass die Silane der allgemeinen Formel (I) keine Reaktivität gegenüber der Resol-Komponente zeigen.

### Mengen der Komponenten in der erfindungsgemäßen Zusammensetzung:

In einer bewährten Ausführungsform enthält die erfindungsgemäße Zusammensetzung
(1) **100 Gew. Teile** eines Nitrilkautschuks mit Wiederholungseinheiten mindestens eines konjugierten Diens, mindestens eines α,β-ungesättigten Nitrils und mindestens eines carboxylgruppenhaltigen, copolymerisierbaren Termonomers,
(2) **1 bis 50 Gew.Teile**, bevorzugt **2 bis 20 Gew.Teile** und insbesondere **3 bis 15 Gew.Teile** mindestens eines Resols
(3) **20 bis 100 Gew.Teile**, bevorzugt **20 bis 60 Gew.Teile** mindestens eines silikatischen Füllstoffs und **1 bis 20 Gew.%**, bevorzugt **2 bis 18 Gew %**, bezogen auf das Gewicht des silikatischen Füllstoffs mindestens eines Silans mit der allgemeinen Formel (I) 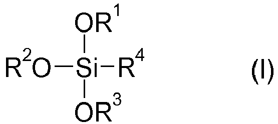 worin
   - R¹, R² und R³: gleich oder verschieden sind und geradkettige oder verzweigte C₁-C₂₅ Alkylreste oder R⁴-C(=O)-, wobei R⁴ für einen geradkettigen oder verzweigten C₁-C₂₅₋Alkylrest steht, bedeuten und
   - R⁴: für geradkettige oder verzweigte C₁-C₁₄-Alkylreste steht, die keinen, einen, zwei oder mehrere Substituenten ausgewählt aus Vinyl-, -SH, substituiertem oder unsubstituiertem Phenyl-, Methacryloxy- und Isocyanato- aufweisen, oder für -R⁵-(S)ₓ-R⁵-Si(OR¹)(OR²)(OR³) steht, worin R¹, R² und R³ gleich oder verschieden sind und die gleichen Bedeutungen wie in Formel (II) besitzen, R⁵ für einen geradkettigen oder verzweigten C₁-C₁₄-Alkylenrest und x für eine Zahl von 1 bis 8 steht,
oder alternativ **20 bis 125 Gew.Teile**, bevorzugt **20 bis 110 Gew.Teile** ein, bereits mit einem Silan, bevorzugt der allgemeinen Formel (II) modifizierter silikatischer Füllstoff.

In einer besonders bewährten Ausführungsform enthält die erfindungsgemäße Zusammensetzung
(1) **100 Gew. Teile** eines Nitrilkautschuks mit Wiederholungseinheiten mindestens eines konjugierten Diens, mindestens eines α,β-ungesättigten Nitrils und mindestens eines carboxylgruppenhaltigen, copolymerisierbaren Termonomers,
(2) **1 bis 50 Gew.Teile**, bevorzugt **2 bis 20 Gew.Teile** und insbesondere **3 bis 15 Gew.Teile** eines Resols der allgemeinen Formel (I) 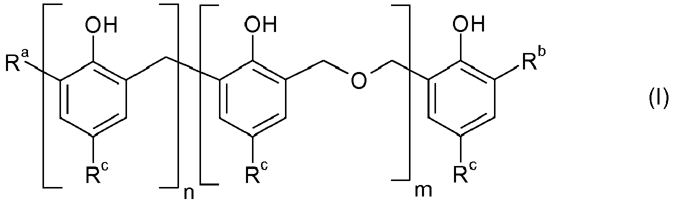 worin
   - R^{a}: für H, -CH₃, -CH₂OH oder -CH₂Br steht,
   - R^{b}: für -CH₂OH oder -CH₂Br steht und
   - R^{c}: einen geradkettigen oder verzweigten C₁-C₁₅-Alkylrest darstellt und
   n und m gleich oder verschieden sind und ganze Zahlen im Bereich von 0 bis 25 sind.
(3) **20 bis 100 Gew.Teile**, bevorzugt **20 bis 60 Gew.Teile** eines silikatischen Füllstoffs und 1 **bis 20 Gew.%**, bevorzugt **2 bis 18 Gew %**, bezogen auf das Gewicht des silikatischen Füllstoffs eines Silans mit der allgemeinen Formel (I) 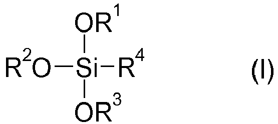 worin
   - R¹, R² und R³: gleich oder verschieden sind und geradkettige oder verzweigte C₁-C₂₅ Alkylreste oder R⁴-C(=O)-, wobei R⁴ für einen geradkettigen oder verzweigten C₁-C₂₅-Alkylrest steht, bedeuten und
   - R⁴: für geradkettige oder verzweigte C₁-C₁₄-Alkylreste steht, die keinen, einen, zwei oder mehrere Substituenten ausgewählt aus Vinyl-, -SH, substituiertem oder unsubstituiertem Phenyl-, Methacryloxy- und Isocyanato- aufweisen, oder für -R⁵-(S)ₓ-R⁵-Si(OR¹)(OR²)(OR³) steht, worin R¹, R² und R³ gleich oder verschieden sind und die gleichen Bedeutungen wie in Formel (II) besitzen, R⁵ für einen geradkettigen oder verzweigten C₁-C₁₄-Alkylenrest und x für eine Zahl von 1 bis 8 steht,
   oder alternativ **20 bis 125 Gew.Teile**, bevorzugt **20 bis 110 Gew.Teile** ein, bereits mit einem Silan, insbesondere der allgemeinen Formel (II) modifizierter silikatischer Füllstoff.

### Weitere optionale Komponenten der erfindungsgemäßen Mischung:

Neben dem carboxylierten Nitrilkautschuk kann die erfindungsgemäße Mischung auch noch weitere Polymere in Form von ein oder mehreren weiteren Kautschuken, ein oder mehreren weiteren Thermoplasten oder beliebigen Mischungen daraus enthalten.

### Kautschuke:

Als weitere Kautschuke können beispielsweise ein oder mehrere der folgenden eingesetzt werden:
- Styrol-Butadien Kautschuk (auch als SBR abgekürzt)
- Nitrilkautschuk (auch als NBR abgekürzt)
- Hydrierter Nitrilkautschuk (auch als HNBR abgekürzt)
- Ethylenvinylacetat-Copolymer (auch als EVM abgekürzt)
- Ethylen-Propylen-Dien-Monomer Kautschuk (auch als EPDM abgekürzt)
- Ethylen Acrylat Kautschuk (auch als AEM abgekürzt)
- Acrylat Kautschuke (auch als ACM abgekürzt)
- Fluorkautschuke (auch als FKM abgekürzt)
- Chloroprenkautschuke (auch als CR abgekürzt)
- Chloriertes Polyethylen (CM)

Hierbei hat es sich bewährt, den oder die weiteren Kautschuke mit mindestens 20 Gew.Teilen bezogen auf 100 Gew.Teile der Nitrilkautschukkomponente 1) einzusetzen.

### Thermoplasten:

**Als thermoplastische Polymere** können alle üblichen thermoplastischen Polymere eingesetzt werden,

Typische und geeignete Thermoplaste sind dabei Polyvinylchlorid, Polyamide, Polyimide, Polyether, Polyester, Polyphenylensulfid (PPS), und/oder Polycarbonate. Möglich ist der Einsatz eines einzelnen Thermoplasten oder aber auch die Kombination verschiedener Thermoplaste. Bevorzugt ist der Einsatz von Polyvinylchlorid (PVC), wobei es sich bewährt hat, dass 10-50 Gew.Teile Polyvinylchlorid bezogen auf 100 Gew.Teile der Nitrilkautschukkomponente 1) eingesetzt werden.

Die erfindungsgemäßen Mischungen können ein oder mehrere weitere, in der Kautschukindustrie übliche Additive enthalten.

Es ist möglich **halogenhaltige Verbindungen** als weitere Komponente zuzusetzen. Diese wirken beschleunigend. Bei der Wahl des Anteils halogenhaltiger Bestandteile - etwa in Form flammwidriger Weichmacher - ist jedoch darauf zu achten, dass keine vorzeitige Vulkanisation eintritt. Geringe Mengen, kommen aber als Aktivatoren für halogenfreie Resole in Betracht. Geeignet ist beispielsweise der Zusatz von 5-10 phr Polychloropren.

Es ist ferner möglich, ein oder mehrere **Alterungsschutzmittel** zuzusetzen. Bei der Wahl des Alterungsschutzmittels ist darauf zu achten solche zu verwenden, die die Resol-Komponente nicht deaktivieren. Alterungsschutzmittel auf Basis von Aminen, die zu einer Deaktivierung der Resol-Komponente führen können, wie z.B. TMQ oder MMBI sind nicht bevorzugt. Die Verwendung von Diphenylamin-Derivaten sind möglich, wenn geringe Einschränkungen bei den Eigenschaften in Kauf genommen werden können. Bevorzugt ist der Einsatz phenolischer Alterungsschutzmittel. Diese sind gut wirksam und stören die Vernetzung nicht. Geeignet sind z.B. Bisphenolen. Es hat sich bewährt, diese mit 1-10 phr, bevorzugt 2-5 phr und besonders bevorzugt 3-4 phr einzusetzen.

Der Zusatz von Metalloxiden ist nicht erwünscht. Bevorzugt enthalten die erfindungsgemäßen Zusammensetzungen keine Metalloxide wie z.B. Zinkoxide sind überflüssig. Auch sonstige Metallsalze wie z.B. Zinn-II-chlorid, die in anderen Fällen als Aktivator für eine "Harzvernetzung" verwendet werden, sollten bevorzugt nicht als Bestandteil in den erfindungsgemäßen Zusammensetzungen enthalten sein, da es analog zum Zinkoxid zu einer Reaktion mit den Carboxylgruppen des Nitrilkautschuks kommen kann. Auch der Zusatz von Epoxidhaltigen Verbindungen z.B. in Form von epoxidiertem Soyabohnenöl als Weichmacher oder in Form von Silanen, deren Seitenketten Epoxidgruppen aufweisen, ist nicht bevorzugt, da es zu Reaktionen mit Phenolen zu Phenylether-Derivaten kommen kann.

### Herstellung der vulkanisierbaren Zusammensetzung:

Gegenstand der Erfindung ist ferner die Herstellung der erfindungsgemäßen Zusammensetzungen durch Mischung der Komponenten (1), (2) und (3) und der optional weiteren enthaltenen Komponenten. Dieser Mischvorgang kann in allen in der Gummiindustrie üblichen Mischaggregaten, wie z.B. Innenmischern oder Walzen, durchgeführt werden. Die Reihenfolge der Zudosierung ist für den Fachmann durch geeignete Versuche ohne Probleme ermittelbar.

Beispielhaft sind nachfolgend zwei Varianten dargestellt, wie vorgegangen werden kann:

### Verfahren A: Herstellung im Innenmischer

Bevorzugt sind Innenmischer mit sogenannter "ineinanderreifender" Rotorgeometrie.
Zum Startzeitpunkt erfolgt die Beschickung des Innenmischers mit dem in Ballenform vorliegenden carboxylgruppenhaltigen Nitrilkautschuk und es kommt zur Zerkleinerung der Ballen. Nach einem geeigneten Mischzeitraum (z.B. 45 sec) erfolgt die Zugabe des silikatischen Füllstoffes und des Silans der allgemeinen Formel (I). Das Mischen erfolgt unter Kontrolle der Temperatur mit der Maßgabe, dass das Mischgut für eine geeignete Zeit (z.B. mindestens 1 Minute) bei einer Temperatur im Bereich von 130 bis 150°C verbleibt. Nach einem weiteren geeigneten Mischzeitraum (z.B. 2 Minuten 15 Sekunden) erfolgt die Zugabe der weiteren Mischungsbestandteile wie optional dem halogenhaltigen Aktivator, Stearinsäure, Antioxidantien, Weichmacher, Weisspigmente (z.B. Titandioxid), Farbstoffen und sonstigen Verarbeitungswirkstoffen. Nach einem weiteren geeigneten Mischzeitraum (z.B. 1 Minute) wird der Innenmischer gelüftet und der Schacht gereinigt. Nach einem weiteren geeigneten Zeitraum (z.B. 1 Minute) wird der Innenmischer unter Erhalt der vulkanisierbaren Mischung entleert.
Die Resol Komponente 2) wird bevorzugt nach der Entleerung des Innenmischers auf einer Walze im Batch-off Prozess zugegeben. Eine Beschickung nach ca. 4 min Mischzeit im Innenmischer ist beispielsweise möglich, falls die Mischguttemperatur unter ca. 120°C liegt. Nach Abkühlung liegt die vulkanisierbare Mischung vor. Die so hergestellten Mischungen können in üblicher Weise, etwa durch die Mooney-Viskosität, durch Mooney-Scorch oder durch einen Rheometertest beurteilt werden.

### Verfahren B: Herstellung auf der Walze

Werden Walzen als Mischaggregate verwendet, kann in analoger Weise und Reihenfolge bei der Zudosierung vorgegangen werden. Falls es sich schwierig erweist, Mischguttemperaturen von über 130°C zu erzielen, hat es sich bewährt, die erfindungsgemäße Mischung durch Verwendung von mit Silanen der allgemeinen Formel (I) bereits modifizierten silikatischen Füllstoffen herzustellen.

### Durchführung der Vulkanisation der erfindungsgemäßen Zusammensetzung

**Gegenstand der Erfindung** ist ferner das Verfahren zur Herstellung von Vulkanisaten, indem man die erfindungsgemäße Zusammensetzung bevorzugt unter erhöhter Temperatur der Vulkanisation unterwirft.

Die vulkanisationsfähige Mischung wird hierzu mit Kalandern, Walzen oder Extrudern weiterverarbeitet.. Die vorgeformte Masse wird sodann in Pressen, Autoklaven, Heißluftanlagen oder in sogenannten automatischen Mattenvulkanisationsanlagen ("Auma") vulkanisiert, wobei sich Temperaturen im Bereich von 120°C bis 200°C, bevorzugt 140°C bis 190°C bewährt haben. Auch eine Weiterverarbeitung zu Formartikeln im Spritzgussverfahren ist möglich.

**Gegenstand der Erfindung** sind ferner die so erhältlichen Vulkanisate. Die Vulkanisate können als Formartikel vorliegen, die z.B. als Riemen, Walzen, Schutzbleche, Schuhkomponenten u.a. eingesetzt werden können. Gegenstand der Erfindung sind somit auch diese Verwendungen der erfindungsgemäßen Vulkanisate.

### Beispiele:

### I Einsatzstoffe

Als carboxylgruppenhaltige Nitrilkautschuke wurden die nachfolgend in **Tabelle 1** angegebenen carboxylgruppenhaltige Nitrilkautschuke eingesetzt:

**Tabelle 1: Eingesetzte carboxylgruppenhaltige Nitrilkautschuke (Komponente 1) (Handelsprodukte der Lanxess Deutschland GmbH)**

| **XNBR (Komponente 1)** | **Acrylnitril-Gehalt (Gew.%)** | **Type des Carbonsäure-Termonomers** | **Gehalt des Carbonsäure-Monomers im XNBR (Gew.%)** | **Mooney-Viskosität ML 1+4@ 100°C** |
|---|---|---|---|---|
| Krynac® X 160 | 32,5 +/- 1,5 | Dicarbonsäure | 1 | 58 |
| Krynac® X 146 | 32,5 +/- 1,5 | Dicarbonsäure | 1 | 45 |
| Krynac® X 740 | 26,5 +/- 1,5 | Monocarbonsäure | 7 | 38 |
| Krynac® X 750 | 27 +/- 1,5 | Monocarbonsäure | 7 | 47 |

Die in den Beispielen verwendeten Resole sind in **Tabelle 2** zusammengefasst.

**Tabelle 2: Eingesetzte Resole (Komponente 2) (Handelsprodukte der SI Group, Inc. 2750 B Road, Schenectady, NY 12308, USA)**

| **Resol (Komponente 2)** | **Handelsbezeichnung*** | **Schmelz-//Erweichungstemperatur [°C]** | **Methylol-Gehalt [%]** | **Brom-Gehalt [%]** |
|---|---|---|---|---|
| Alkylphenolharz | SP 1045H | 60-66//nicht relevant | 5-9 | 0 |
| Bromiertes Octylphenolharz mit Methylolgruppen | SP 1055 | 140-168//85-95 | 10-15 | 3,6-4 |

Die in den Beispielen verwendeten Silane bzw. der mit einem Silan modifizierte silikatische Füllstoff sind in **Tabelle 3** zusammengefasst.

**Tabelle 3: Eingesetzte Silane bzw. silanmodifizierte Silikate (Komponente 3) (Handelsprodukte der Evonik Industries AG)**

| **handelsbezeichnung** | | **Chemische Bezeichnung, Bezugsquelle** |
|---|---|---|
| Dynasylan^{®} OCTEO | erfindungsgemäß | Octyltriethoxysilan |
| Dynasylan^{®} VTEO | erfindungsgemäß | Vinyltriethoxysilan |
| Dynasylan^{®} AMEO | nicht erfindungsgemäß | 3-Aminopropyl-triethoxysilan |
| Dynasylan^{®} GLYEO | nicht erfindungsgemäß | 3-Glycidyloxypropyl-triethoxysilan |
| Si 69 | erfindungsgemäß | Bis(triethyoxsilylpropyl)tetrasulfid |
| Coupsil^{®} 8113 PV | erfindungsgemäß | mit Si 69 modifizierte gefällte Kieselsäure Ultrasil^{®} VN3 (12,7 Gew.Teile auf 100 Gew.Teile) |
| Aerosil^{®} 8200 | erfindungsgemäß | mit Hexamethylendisilazan modifizierte pyrogene Kieselsäure |

Als weitere Einsatzstoffe wurden in den nachfolgenden Beispielen die folgenden verwendet:
- **Aflux^{®} 25**: Kombination von Isoalkanen mit Fettsäuren (Schmiermittel, Rheinchemie Rheinau GmbH)
- **Baypren^{®} 210**: Poly(2-chlorobutadien-1,3) mit Mooney-Viskosität ML 1+4@100°C = 43; (Lanxess Deutschland GmbH)
- **Edenor^{®} C1898-100**: Stearinsäure (BASF AG)
- **Mahlschwefel 90/95 Chance**: doppelt raffinierter, löslicher Elementarschwefel mit einem Reinheitsgrad von min. 99,9 %, angepastet mit Bitumen, Öl oder Kieselsäure (Avokal GmbH)
- **Mesamoll^{®}**: Alkylsulfonsäureester des Phenols (Weichmacher; Lanxess Deutschland GmbH)
- **Oppasin Blau 6900**: Organisches Pigment; Indanthronblau (BASF AG)
- **Oppasin Gruen 8730**: Cu-Phthalocyanin halogeniert (BASF AG)
- **Oppasin Orange 3050**: Pyrazolonorange (BASF AG)
- **Oppasin Rubin 4630**: BON-Rubin 4B, Ca-Lack (BASF AG)
- **Perbunan^{®} 2845F**: Acrylnitril-Butadien Kautschuk (Mooney Viskosität ML 1+4@100°C = 45; Acrylnitril-Gehalt 28Gew.%) (Lanxess Deutschland GmbH)
- **Tronox^{®} R-U-5**: Titandioxid (Füllstoff)
- **Vulcazit DM/C**: Di(benzothiazol-2-yl) disulfide (MBTS)
- **Vulkalsil® S**: Gefälltes Silikat mit einer BET Oberfläche surface area: 160 - 200 m²/g Lanxess Deutschland GmbH) (**Komponente 3**)
- **Vulkanox^{®} HS/LG**: 2,2,4-Trimethyl-1,2-dihydrochinolin (Antioxidans; Lanxess Deutschland GmbH)
- **Vulkanox® MB2/MG**: 4- und 5-methyl-2-mercapto-benzimidazol (MMBI) (Antioxidans; Lanxess Deutschland GmbH)
- **Vulkanox^{®} BKF**: 2,2'-Methylen-bis-(4-methyl-6-tert.-butyl-phenol) (Antioxidans, Rheinchemie Rheinau GmbH)
- **Zinoxid aktiv^{®}**: Zinkoxid (Lanxess Deutschland GmbH)

### II Allgemeine Beschreibung der Herstellung der vulkanisierbaren Mischungen

Die Herstellung der Mischungen erfolgte in Innenmischern mit ineinandergreifender Rotorgeometrie mit 1,5 l bis 5 l Nutzvolumen: Die Mischungsbestandteile, ihre Mengen sowie ggf. abweichende Einstellungen des Innenmischers je nach Beispiel sind in den späteren Tabellen aufgeführt.

### Mischungsverlauf:

- 0 min:: Polymer - Stempel ab.
- 1 min:: Stempel auf, Innenmischer öffnen Beschickung mit dem Silikat und dem jeweiligen Silan
- 1 min, 10sec:: Stempel ab bis
- 4 min:: Mischen, Temperatur von > 140°C nach ca. 2 min erreicht. Durch Einstellung der Drehzahl wird sichergestellt, dass die Temperatur 150°C nicht übersteigt.
- 4 min:: Stempel auf, Innemischer öffnen, Beschickung mit den übrigen Mischungsbestandteilen außer dem Resol
- 4 min, 15 sec :: Stempel ab
- 4 min , 30 sec..: Entleeren

Anschließend erfolgt das Abkühlen auf der Walze und Einmischen des jeweiligen Resols.

### Einstellung des Innenmischers:

| | |
|---|---|
| Drehzahl: | Variabel |
| Stempeldruck: | 5 bar |
| Temperatur: | 40°C |
| Füllgrad: | 72% |

Die Walzentemperatur betrug 40°C

### III Charakterisierung der Mischungen und des Vulkanisationsverlaufs sowie der erhaltenen Vulkanisate

Die Charakterisierung der Mischungen und des Vulkanisationsverlaufs sowie der erhaltenen Vulkanisate erfolgte gemäß den Methoden der in der nachfolgenden Tabelle genannten Normen.

**Tabelle 4: Methoden**

| **Charakterisierung** | **Norm** |
|---|---|
| Zugversuch (ISO dumbbell No. 2) | DIN 53504 |
| Shore A Härte | DIN 53519-1 |
| Rückprallelastizität | DIN 53612 |
| Abrieb | ASTM D 5963 |
| Druckverformungsrest | DIN ISO 815 |
| Drehmoment/Vulkanisationsverhalten | ASTM D 5289 im Rheometer bei 170°C für 60 min. |
| Mooney Viskosität ML 1+4@100°C | ASTM D 1646 |

Die in dem folgenden Tabellen angegebenen Abkürzungen haben die folgenden Bedeutungen:

| | |
|---|---|
| Smax | Maximum der Vulkameteranzeige |
| t₅ | Zeitpunkt der Vulkanisation, bei dem 5% des Endumsatzes erreicht sind |
| t₁₀ | Zeitpunkt der Vulkanisation, bei dem 10% des Endumsatzes erreicht sind |
| t₉₀ | Zeitpunkt der Vulkanisation, bei dem 90% des Endumsatzes erreicht sind |
| TS | tensile strenght (Zugfestigkeit) |
| EB | elongation at break (Bruchdehnung) |
| M50 | Spannungswert bei 50% Dehnung |

### IV Beispiele

### IV.1 Beispiele 1*-3*, 6* und 7* (erfindungsgemäß) sowie Vergleichsbeispiel 4 und 5

Die in den Beispielen 1*-3* sowie den Vergleichsbeispielen 4 und 5 verwendeten Mischungen sind in **Tabelle 5** zusammengefasst.

**Tabelle 5: Mischungszusammensetzung; Beispiele 1*-3*, 6* und 7*; Vergleichsbeispiel 4 und 5**

| | **Beispiele** | **1*** | **2*** | **3*** | **4** | **5** | **6*** | **7*** |
|---|---|---|---|---|---|---|---|---|
| KRYNAC^{®} X 750 | | 100 | 100 | 100 | 100 | 100 | 100 | 100 |
| TRONOX^{®} R-U-5 | | 5 | 5 | 5 | 5 | 5 | 5 | 5 |
| VULKASIL^{®} S | | 30 | 30 | 30 | 30 | 30 | 30 | 30 |
| COUPSIL^{®} 8113 PV | | | | | | | 30 | |
| AEROSIL^{®} R 8200 | | | | | | | | 30 |
| MESAMOLL | | 10 | 10 | 10 | 10 | 10 | 10 | 10 |
| SI 69 | | 5 | | | | | | |
| DYNASYLAN^{®} OCTEO | | | | 5 | | | | |
| DYNASYLAN^{®} VTEO | | | 5 | | | | | |
| DYNASYLAN^{®} AMEO | | | | | | 5 | | |
| DYNASYLAN^{®} GLYEO | | | | | 5 | | | |
| SP-1055 | | 10 | 10 | 10 | 10 | 10 | 10 | 10 |
| | | | | | | | | |
| Total | phr | 160 | 160 | 160 | 160 | 160 | 155 | 155 |
| Dichte | g/cm³ | 1,14 | 1,132 | 1,131 | 1,136 | 1,134 | 1,141 | 1,141 |

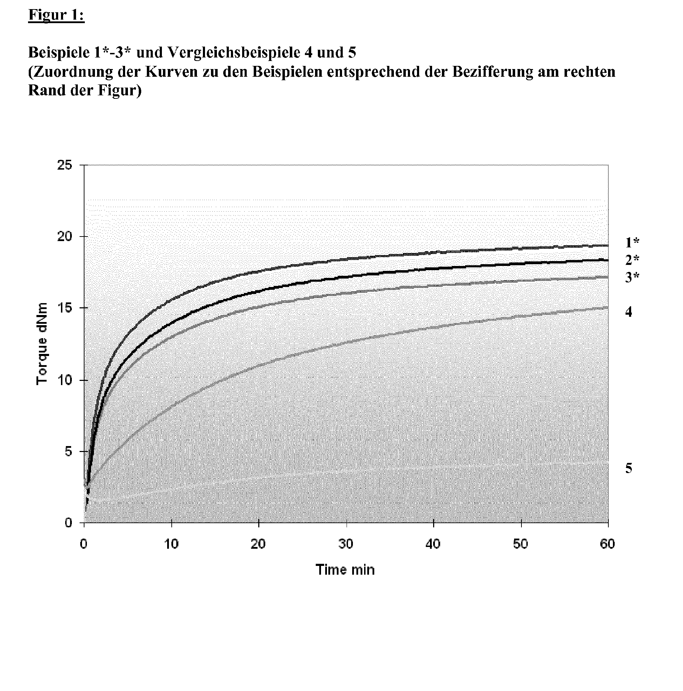

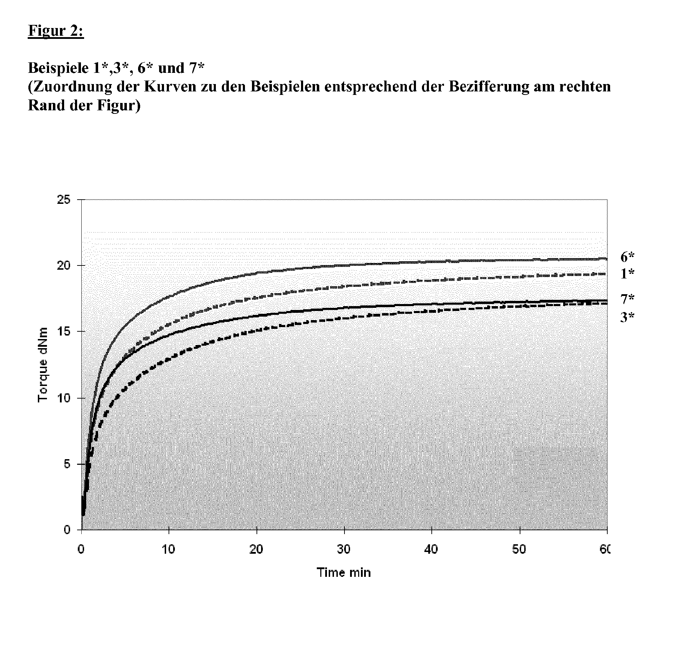

Die Abhängigkeit des Drehmoments in Abhängigkeit von der Zeit ist in **Figur 1** sowie **Figur 2** aufgetragen. Aus **Figur 1** ist zu erkennen, dass die unter Einsatz nicht erfindungsgemäßer Silane (Dynasylan^{®} AMEO bzw. Dynasylan^{®} GLYEO) hergestellten Mischungen nur sehr langsam vulkanisieren. Das finale Drehmoment ist ebenfalls nicht ausreichend, somit liegt keine ausreichenden Vernetzung vor. Mit erfindungsgemäßen Silanen (Si 69 bzw. Dynasylan VTEO bzw. OCTEO) werden dagegen hohe finale Drehmomente erreicht und es erfolgt ein schneller Vulkanisationsstart bei gleichzeitig ausreichender Scorchstabilität.

### IV.2 Vergleichsbeispiele 8-12 und Beispiele 13* und 14* (erfindungsgemäß)

Die in den Vergleichsbeispielen 8-12 sowie den erfindungsgemäßen Beispielen 13* und 14* eingesetzten Mischungen sind in **Tabelle 6** zusammengefasst.

**Tabelle 6: Mischungszusammensetzungen der Beispiele 8-12 (Vergleich) und 13*-14* (erfindungsgemäß)**

| **Beispiel** | **8** | **9** | **10** | **11** | **12** | **13*** | **14*** |
|---|---|---|---|---|---|---|---|
| PERBUNAN^{®} 2845 F | 100 | | | | | | |
| KRYNAC^{®} X 750 | | 100 | | 100 | | 100 | |
| KRYNAC^{®} X 146 | | | 100 | | 100 | | 100 |
| KRYNAC^{®} X 740 | | | | | | | |
| EDENOR^{®} C 18 98-100 | 0,5 | | | | | 0,5 | 0,5 |
| VULKASIL^{®} S | 50 | 30 | 30 | 30 | 30 | 30 | 30 |
| TRONOX^{®} R-U-5 | 5 | 5 | 5 | 5 | 5 | 5 | 5 |
| OPPASIN^{®} BLAU 6900 | | 2 | 2 | | | | |
| OPPASIN^{®} GRUEN 8730 | | | | 2 | 2 | | |
| OPPASIN^{®} ORANGE 3050 | | | | | | 2 | 2 |
| OPPASIN^{®} RUBIN 4630 | | | | | | | |
| SI 69 | 5 | 5 | 5 | | | 5 | 5 |
| VULKANOX^{®} HS/LG | 1,5 | 1,5 | 1,5 | | | | |
| VULKANOX^{®} MB2/MG | 1,5 | 1,5 | 1,5 | | | | |
| VULKANOX^{®} BKF | | | | 1,5 | 1,5 | 1,5 | 1,5 |
| MESAMOLL^{®} | 10 | 10 | 10 | 10 | 10 | 10 | 10 |
| BAYPREN^{®} 210 | | | | | | | |
| SP 1045 H | | | | | | | |
| SP-1055 | | | | 10 | 10 | 10 | 10 |
| ZINKOXYD AKTIV | 3 | 3 | 3 | | | | |
| MAHLSCHWEFEL 90/95 CHANCE | 1,5 | 1,5 | 1,5 | | | | |
| VULKACIT^{®} D/C | 0,5 | 0,5 | 0,5 | | | | |
| VULKACIT^{®} DM/C | 1,5 | 1,5 | 1,5 | | | | |
| | | | | | | | |
| Total [phr] | 180 | 161,5 | 161,5 | 158,5 | 158,5 | 164 | 164 |
| Dichte g/cm³ | 1,213 | 1,164 | 1,147 | 1,138 | 1,121 | 1,135 | 1,119 |

Die Herstellung der vulkanisierbaren Mischungen erfolgte gemäß der allgemeinen Anleitung. Die Charakterisierung erfolgte gemäß den unter Punkt I angegebenen Methoden.

**Tabelle 7: Vulkanisationsverlauf und Vulkanisateigenschaften für die Beispiele 8-12 (Vergleich) und 13*-14* (erfindungsgemäß)**

| | | **Vulkanisation mit ZnO/ Schwefel** | | | **Vulkasil^{®} S** | | **Vulkasil^{®} S** | | |
|---|---|---|---|---|---|---|---|---|---|
| | | **8** | **9** | **10** | **11** | **12** | **13*** | **14*** | |
| **Basis Polymer** | | **Perbunan 2845 F** | **Krynac X 750** | **Krynac X 146** | **Krynac X 750** | **Krynac X 146** | **Krynac X 750** | **Krynac X 146** | |
| ML 1+4/100°C | MU | 50 | 81 | 74 | 70 | 51 | 69 | 67 | |

| **Rheometer 170°C/60 min** | | | | | | | | | |
|---|---|---|---|---|---|---|---|---|---|
| Smax | dNm | 22 | 17 | 18 | 17 | 19 | 14 | 16 | |
| t₁₀ | min | 1,2 | 0,7 | 0,9 | 0,8 | 2 | 0,8 | 2,2 | |

| **Rheovulcameter flow** | | | | | | | | | |
|---|---|---|---|---|---|---|---|---|---|
| Formfüllung | % | 54 | 16 | 25 | 31 | 40 | 26 | 30 | |
| Härte | Shore A | 60 | 65 | 56 | 57 | 68 | 54 | 54 | |

| **Stress-strain properties** | | | | | | | | | |
|---|---|---|---|---|---|---|---|---|---|
| TS | MPa | 18,9 | 14,3 | 14 | 24,6 | 19,4 | 17,2 | 15,5 | |
| EB | % | 375 | 255 | 300 | 565 | 535 | 395 | 345 | |
| M50 | MPa | 1,3 | 1,8 | 1,3 | 1,3 | 1,3 | 1 | 1 | |
| Abrieb | mm³ | 53 | 35 | 58 | 133 | 136 | 58 | 58 | |

| **Druckverformungsrest (DVR)** | | | | | | | | | |
|---|---|---|---|---|---|---|---|---|---|
| DVR(168h/100°C) | % | 40 | 44 | 39 | 51 | 38 | 39 | 30 | |

Aus **Tabelle 7** ist erkennbar, dass sich die auf erfindungsgemäßen Mischungen beruhenden Vulkanisate durch einen deutlich verbesserten Druckverformungsrest auszeichnen gegenüber Mischungen, die mit herkömmlichen Zinkoxid/Schwefel Vernetzungssystem hergestellt wurden bzw. mit einem Silica Füllstoff, aber ohne das Silan. Vergleicht man den Druckverformungsrest der Vergleichsbeispiele 9 und 11 mit demjenigen des erfindungsgemäßen Beispiels 13* so wird dies evident. Gleiches gilt für den Vergleich der Vergleichsbeispiele 10 und 12 im Gegensatz zum erfindungsgemäßen Beispiel 14*.

### IV.3 Beispiele 15-19 und 21, 22, 25 (erfindungsgemäß) sowie Vergleichsbeispiele 20, 23 und 24

Die Herstellung der vulkanisierbaren Mischungen mit den in **Tabelle 8** angegebenen Zusammensetzungen erfolgte gemäß der oben aufgeführten allgemeinen Anleitung. Die Charakterisierung erfolgte gemäß den unter Punkt I angegebenen Methoden.

**Tabelle 8: Beispiele 15-19 und 21, 22, 25 (erfindungsgemäß) sowie Vergleichsbeispiele 20, 23 und 24**

| | | **15*** | **16*** | **17*** | **18*** | **19*** | **20** | **21*** | **22*** | **23** | **24** | **25*** |
|---|---|---|---|---|---|---|---|---|---|---|---|---|
| KRYNAC^{®} X 146 | | 100 | 100 | 100 | 100 | 100 | 100 | 100 | 100 | 100 | 100 | 100 |
| TRONOX^{®} R-U-5 | | 5 | 5 | 5 | 5 | 5 | 5 | 5 | 5 | 5 | 5 | 5 |
| VLTLKASIL^{®} S | | 40 | 40 | 40 | 40 | 40 | 40 | 40 | 40 | 40 | 40 | |
| COUPSIL^{®} 8113 PV | | | | | | | | | | | | 40 |
| SI 69 | | 6 | 3 | 6 | 6 | 3 | | 1,5 | 3 | | | |
| MESAMOLL^{®} | | 10 | 10 | 10 | 10 | 10 | 10 | 10 | 10 | 10 | 10 | 10 |
| AFLUX ^{®}25 | | 2 | 2 | 2 | 2 | 2 | 2 | 2 | 2 | 2 | 2 | 2 |
| EDENOR^{®} C 18 98-100 | | 0,5 | 0,5 | 0,5 | 0,5 | 0,5 | 0,5 | 0,5 | 0,5 | 0,5 | 0,5 | 0,5 |
| VULKANOX^{®} BKF | | 2 | 2 | 2 | 2 | 2 | 2 | 2 | 2 | 2 | 2 | 2 |
| SP-1055 | | 10 | 4 | 4 | 13 | 13 | 4 | 7 | 10 | 13 | 10 | 10 |
| | | | | | | | | | | | | |
| Gesamt phr | | 175,5 | 166,5 | 169,5 | 178,5 | 175,5 | 163,5 | 168 | 172,5 | 172,5 | 169,5 | 169,5 |
| Dichte g/cm³ | | 1,147 | 1,149 | 1,148 | 1,146 | 1,147 | 1,15 | 1,149 | 1,147 | 1,147 | 1,148 | 1,148 |

### Einstellung des Innenmischers:

Drehzahl: Variabel
Stempeldruck: 8 bar
Temperatur: 40°C
Füllgrad: 70%
Die Walzentemperatur betrug 40°C

Für die aus den Mischungen gemäß Beispiel 15-19 und 21, 22, 25 (erfindungsgemäß) sowie den Vergleichsbeispielen 20, 23 und 24 hergestellten Vulkanisate wurden die in Tabelle 9 aufgeführten Eigenschaften bestimmt

**Tabelle 9: Vulkanisationsverlauf und Vulkanisateigenschaften**

| **Eigenschaften der vulkanisierbaren Mischung** | | | | | | | | | | | | |
|---|---|---|---|---|---|---|---|---|---|---|---|---|
| | **15*** | **16*** | **17*** | **18*** | **19*** | **20** | **21*** | **22*** | **23** | **24** | **25*** | **15*** |
| ML 1+4/100°C | MU | 58 | 60 | 54 | 57 | 61 | 82 | 61 | 58 | 61 | 68 | 70 |
| MSR | | 0,411 | 0,476 | 0,474 | 0,393 | 0,403 | 0,414 | 0,448 | 0,415 | 0,439 | 0,432 | 0,435 |
| Re1.decay@30sec | % | 12,7 | 9,7 | 9,7 | 13,4 | 13,1 | 12,4 | 11,2 | 12,4 | 10,6 | 11,4 | 11,5 |
| | | | | | | | | | | | | |

| **nach 3d/40°C Heissluftalterung** | | | | | | | | | | | | |
|---|---|---|---|---|---|---|---|---|---|---|---|---|
| ML 1+4/100°C | MU | 83 | 73 | 68 | 81 | 81 | 83 | 76 | 80 | 70 | 75 | 87 |
| MSR | | 0,352 | 0,419 | 0,417 | 0,362 | 0,363 | 0,405 | 0,393 | 0,358 | 0,382 | 0,388 | 0,383 |
| Rel. decay @ 30 sec | % | 16,7 | 12,8 | 12,4 | 16,0 | 15,9 | 13,3 | 14,2 | 16,2 | 14,1 | 14,1 | 14,5 |
| MS-t5/120°C | min | 11,3 | > 45 | > 45 | 10,0 | 10,8 | 15,6 | 16,0 | 12,2 | 6,5 | 6,7 | 7,3 |

| **Monsanto - MDR 2000 E** | | | | | | | | | | | | |
|---|---|---|---|---|---|---|---|---|---|---|---|---|
| Temperatur | 190°C | | | | | | | | | | | |
| Messzeit | 60min | | | | | | | | | | | |
| Minimales Drehmoment | dNm | 1,6 | 1,2 | 1,2 | 1,8 | 1,6 | 2,8 | 1,5 | 1,5 | 1,9 | 2,2 | 1,8 |
| Maximales Drehmoment | dNm | 26,3 | 16,2 | 17,0 | 28,9 | 28,2 | 25,1 | 23,6 | 25,6 | 37,1 | 34,6 | 26,6 |
| Finales Drehmoment | dNm | 26,3 | 16,2 | 17,0 | 28,9 | 28,2 | 25,1 | 23,6 | 25,5 | 37,1 | 34,6 | 26,5 |
| TS 1 | min | 0,6 | 1,0 | 0,9 | 0,5 | 0,6 | 0,5 | 0,7 | 0,6 | 0,4 | 0,4 | 0,5 |
| TS 2 | min | 0,8 | 1,5 | 1,5 | 0,7 | 0,7 | 0,8 | 0,9 | 0,8 | 0,5 | 0,6 | 0,6 |
| t₁₀ | min | 0,9 | 1,2 | 1,2 | 0,8 | 0,8 | 0,8 | 0,9 | 0,9 | 0,7 | 0,7 | 0,7 |
| t₂₅ | min | 1,5 | 2,5 | 2,7 | 1,4 | 1,4 | 1,6 | 1,6 | 1,5 | 1,2 | 1,2 | 1,1 |
| t₅₀ | min | 2,8 | 5,3 | 6,4 | 2,6 | 2,6 | 3,3 | 3,1 | 2,7 | 2,4 | 2,4 | 2,0 |
| t₇₀ | min | 4,6 | 9,6 | 11,9 | 4,1 | 4,1 | 6,1 | 5,0 | 4,3 | 4,3 | 4,2 | 3,3 |
| t₈₀ | min | 6,1 | 13,8 | 17,1 | 5,3 | 5,4 | 9,0 | 6,8 | 5,6 | 6,2 | 6,0 | 4,2 |
| t₉₀ | min | 9,2 | 22,9 | 27,4 | 7,6 | 7,6 | 16,7 | 10,6 | 8,1 | 10,4 | 10,0 | 6,0 |
| t₉₅ | min | 13,4 | 33,4 | 37,9 | 10,5 | 10,2 | 27,6 | 16,1 | 11,4 | 16,2 | 15,8 | 8,3 |
| tan δ Ende | | 0,01 | 0,06 | 0,05 | 0,01 | 0,01 | 0,07 | 0,02 | 0,01 | 0,02 | 0,02 | 0,01 |
| | | | | | | | | | | | | |

| **Vulkanisateigenschaften** | | | | | | | | | | | | |
|---|---|---|---|---|---|---|---|---|---|---|---|---|
| Vemetzungstemperatur | 190°C | | | | | | | | | | | |
| Vemetzungszeit | min | | | | | | | | | | | |
| TS | MPa | 15,6 | 24,8 | 21,9 | 15,6 | 15,2 | 29,5 | 19,5 | 16,7 | 19,6 | 18,9 | 14,3 |
| EB | % | 229 | 529 | 467 | 194 | 190 | 732 | 335 | 239 | 329 | 391 | 230 |
| M50 | MPa | 1,9 | 1,5 | 1,5 | 2,2 | 2,4 | 1,5 | 1,9 | 1,9 | 2,4 | 2,1 | 1,9 |
| M100 | MPa | 3,9 | 2,3 | 2,4 | 5 | 5,4 | 2 | 3,6 | 4,1 | 4,4 | 3,5 | 3,9 |
| M300 | MPa | | 9,5 | 10,2 | | | 5 | 16,3 | | 17,1 | 12,3 | |
| Hardness | Shore A | 64 | 59 | 60 | 68 | 66 | 63 | 64 | 65 | 72 | 69 | 65 |
| Rückprallelastizität | % | 34 | 37 | 39 | 30 | 27 | 35 | 31 | 30 | 23 | 27 | 29 |
| Abrieb | mm³ | 31 | 34 | 36 | 36 | 35 | 54 | 29 | 26 | 49 | 46 | 27 |
| Tear gemäß ASTM D624C | N/mm | 26,8 | 32,1 | 32,1 | 24,5 | 23,3 | 35 | 29,3 | 24,8 | 28 | 31,4 | 23,6 |
| | | | | | | | | | | | | |

| Druckverformungsrest gem. DIN 53517 Sample A: | | | | | | | | | | | | |
|---|---|---|---|---|---|---|---|---|---|---|---|---|
| Deformation | 25% | | | | | | | | | | | |

| Temperatur: 23°C; Zeit: 70h | | | | | | | | | | | | |
|---|---|---|---|---|---|---|---|---|---|---|---|---|
| DVR | % | 3 | 12 | 10 | 2 | 2 | 16 | 6 | 3 | 8 | 9 | 3 |
| | | | | | | | | | | | | |

| Temperatur: 100°C; Zeit: 168h | | | | | | | | | | | | |
|---|---|---|---|---|---|---|---|---|---|---|---|---|
| DVR | % | 36 | 52 | 55 | 31 | 31 | 49 | 36 | 30 | 30 | 34 | 24 |

## Patentansprüche

1. Vulkanisierbare Zusammensetzungen enthaltend
(1) einen Nitrilkautschuk mit Wiederholungseinheiten mindestens eines konjugierten Diens, mindestens eines α,β-ungesättigten Nitrils und mindestens eines carboxylgruppenhaltigen, copolymerisierbaren Termonomers,
(2) mindestens ein Resol,
(3) mindestens einen silikatischen Füllstoff und mindestens ein Silan der allgemeinen Formel (I) 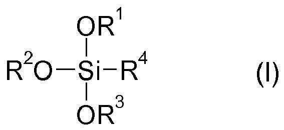 worin
R¹, R² und R³ gleich oder verschieden sind und geradkettige oder verzweigte C₁-C₂₅ Alkylreste oder R⁴-C(=O)-, wobei R⁴ für geradkettiges oder verzweigtes C₁-C₂₅ -Alkyl steht, bedeuten und
R⁴ für geradkettige oder verzweigte C₁-C₁₄-Alkylreste steht, die keine, eine, zwei oder mehrere Substituenten ausgewählt aus Vinyl, -SH, substituiertem oder unsubstituiertem Phenyl, Methacryloxy-, und Isocyanatoaufweisen, oder für -R⁵-(S)ₓ-R⁵-Si(OR¹)(OR²)(OR³) steht, worin R¹, R² und R³ gleich oder verschieden sind und die gleichen Bedeutungen wie in Formel (I) besitzen, R⁵ für einen geradkettigen oder verzweigten C₁-C₁₄-Alkylenrest und x für eine Zahl von 1 bis 8 steht,
oder alternativ einen, mit einem Silan modifizierten silikatischen Füllstoff.

2. Vulkanisierbare Zusammensetzungen nach Anspruch 1, **dadurch gekennzeichnet, dass** der eingesetzte Nitrilkautschuk Wiederholungseinheiten von mindestens einem (C₄-C₆) konjugierten Dien, bevorzugt 1,2-Butadien, 1,3-Butadien, Isopren, 2,3-Dimethylbutadien, Piperylen oder Gemischen daraus enthält und Wiederholungseinheiten von mindestens einem (C₃-C₅)-α,β-ungesättigten Nitrile, bevorzugt Acrylnitril, Methacrylnitril, Ethacrylnitril oder Mischungen davon.

3. Vulkanisierbare Zusammensetzungen nach Anspruch 1 oder 2, **dadurch gekennzeichnet, dass** der eingesetzte Nitrilkautschuk Wiederholungseinheiten mindestens eines carboxylgruppenhaltigen, copolymerisierbaren Termonomers ausgewählt aus der Gruppe der α,β-ungesättigte Monocarbonsäuren, bevorzugt Acrylsäure und Methacrylsäure, α,β-ungesättigte Dicarbonsäuren, bevorzugt Maleinsäure, Fumarsäure, Crotonsäure, Itaconsäure, Citraconsäure und Mesaconsäure, Anhydride α,β-ungesättigter Dicarbonsäuren, bevorzugt Maleinsäureanhydrid, Itaconsäureanhydrid, Citraconsäureanhydrid und Mesaconsäureanhydrid, und Monester α,β-ungesättigter Dicarbonsäuren, bevorzugt **Alkyl-**, bevorzugt C₁-C₁₀-Alkyl, insbesondere Ethyl-, n-Propyl-, iso-Propyl, n-Butyl-, tert.-Butyl, n-Pentyl- oder n-Hexyl-, **Alkoxyalkyl-**, bevorzugt C₂-C₁₂ Alkoxyalkyl-, besonders bevorzugt C₃-C₈- Alkoxyalkyl, **Hydroxyalkyl,** bevorzugt C₁-C₁₂ Hydroxyalkyl-, besonders bevorzugt C₂-C₈- Hydroxyalkyl, **Cycloalkyl-**, bevorzugt C₅-C₁₂-Cycloalkyl-, besonders bevorzugt C₆-C₁₂-Cycloalkyl, **Alkylcycloalkyl-**, bevorzugt C₆-C₁₂-Alkylcycloalkyl-, besonders bevorzugt C₇-C₁₀-Alkylcycloalkyl, **Aryl-**, bevorzugt C₆-C₁₄-Aryl-Monoester enthält.

4. Vulkanisierbare Zusammensetzungen nach einem der Ansprüche 1-3, **dadurch gekennzeichnet, dass** das Resol ein oder mehrere Verbindungen der allgemeinen Formel (I) enthält, 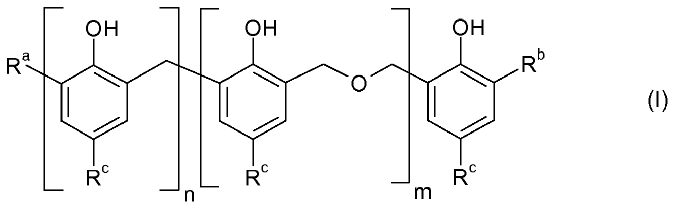 worin
R^{a} für H, -CH₃, -CH₂OH oder -CH₂Br steht,
R^{b} für -CH₂OH oder -CH₂Br steht und
R^{c} einen geradkettigen oder verzweigten C₁-C₁₅-, bevorzugt C₄-C₈-Alkylrest, besonders bevorzugt einen tert. Octylrest oder tert. Butylrest darstellt und
n und m gleich oder verschieden sind und ganze Zahlen im Bereich von 0 bis 25, bevorzugt 0 bis 15 sind.

5. Vulkanisierbare Zusammensetzungen nach einem der Ansprüche 1-4, **dadurch gekennzeichnet, dass** das Resol (2) ein oder mehrere Verbindungen der allgemeinen Formel (I) enthält,
R^{a} für H oder -CH₂OH steht,
R^{b} für -CH₂OH steht und
R^{c} einen geradkettigen oder verzweigten C₄-C₈-Alkylrest darstellt, insbesondere einen tert. Octylrest und
n und m gleich oder verschieden sind und ganze Zahlen im Bereich von 0 bis 15 sind.

6. Vulkanisierbare Zusammensetzungen nach einem der Ansprüche 1-5, **dadurch gekennzeichnet, dass** als silikatische Füllstoffe natürliche Silikate, bevorzugt Kaolin oder Talkum, synthetische Silikate, bevorzugt Aluminiumsilikate oder Erdalkalimetallsilikate wie Magnesium- oder Calciumsilikat, besonders bevorzugt mit einer BET Oberfläche von 20 - 400 m²/g und Primärteilchengröße von 10 - 400 nm, Kieselsäuren, bevorzugt Monokieselsäure oder deren wasserärmeren Kondensate, Glasfasern, Glasfaserprodukte oder Mikroglaskugeln eingesetzt werden.

7. Vulkanisierbare Zusammensetzungen nach einem der Ansprüche 1-6, **dadurch gekennzeichnet, dass** als silikatische Füllstoffe gefällte oder pyrogene Kieselsäuren eingesetzt werden, deren spezifische BET Oberfläche nach ISO 9277 im Bereich von 5 bis 1000 m²/g, bevorzugt 20-500 m²/g und insbesondere im Bereich von 50 - 400 m²/g liegt.

8. Vulkanisierbare Zusammensetzungen nach einem der Ansprüche 1-7, **dadurch gekennzeichnet, dass** mindestens ein silikatischer Füllstoff und mindestens ein Silan der allgemeinen Formel (II) eingesetzt wird, 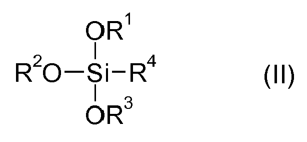 worin
R¹, R² und R³ gleich oder verschieden sind und geradkettige oder verzweigte C₁-C₈-, bevorzugt C₁-C₄-Alkylreste, insbesondere Methyl, Ethyl, n-Propyl oder i-Propyl bedeuten oder R⁴-C(=O)-, wobei R⁴ für einen geradkettigen oder verzweigten C₁-C₁₀-, insbesondere C₁-C₈-Alkylrest steht, bedeuten und
R⁴ für geradkettige oder verzweigte C₁-C₁₀-Alkyl-, insbesondere C₁-C₈-Alkylreste steht, die keinen, einen, zwei oder mehrere Substituenten ausgewählt aus Vinyl-, -SH, substituiertem oder unsubstituiertem Phenyl-, Methacryloxy- und Isocyanato- aufweisen, oder für -R⁵-(S)ₓ-R⁵-Si(OR¹)(OR²)(OR³) steht, worin R¹, R² und R³ gleich oder verschieden sind und die gleichen Bedeutungen wie in Formel (II) besitzen, R⁵ für einen geradkettigen oder verzweigten C₁-C₅, bevorzugt C₁-C₃-Alkylenrest und x für eine Zahl von 1 bis 8, bevorzugt 2 bis 5 steht,
oder alternativ anstelle des silikatischen Füllstoffs und des mindestens einen Silans der allgemeinen Formel (II), ein bereits mit einem Silan der allgemeinen Formel (II), in dem R¹, R², R³ und R⁴ die genannten Bedeutungen haben, modifizierter silikatischer Füllstoff eingesetzt wird.

9. Vulkanisierbare Zusammensetzungen nach einem der Ansprüche 1-8, **dadurch gekennzeichnet, dass** mindestens ein Silan ausgewählt aus der Gruppe Octyltriethoxysilan, Vinyltriethoxysilan und Bis(triethyoxsilylpropyl)oligosulfide, bevorzugt Di, Tri oder Tetrasulfide (x = 2, 3, oder 4) eingesetzt wird.

10. Vulkanisierbare Zusammensetzungen nach einem der Ansprüche 1-9 enthaltend
(1) **100 Gew. Teile** eines Nitrilkautschuks mit Wiederholungseinheiten mindestens eines konjugierten Diens, mindestens eines α,β-ungesättigten Nitrils und mindestens eines carboxylgruppenhaltigen, copolymerisierbaren Termonomers,
(2) **1 bis 50 Gew.Teile**, bevorzugt **2 bis 20 Gew.Teile** und insbesondere **3 bis 15 Gew.Teile** mindestens eines Resols
(3) **20 bis 100 Gew.Teile**, bevorzugt **20 bis 60 Gew.Teile** mindestens eines silikatischen Füllstoffs und **1 bis 20 Gew.%**, bevorzugt **2 bis 18 Gew %**, bezogen auf das Gewicht des silikatischen Füllstoffs mindestens eines Silans mit der allgemeinen Formel (I) 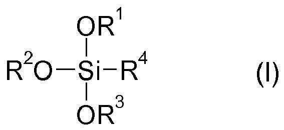 worin
R¹, R² und R³ gleich oder verschieden sind und geradkettige oder verzweigte C₁-C₂₅-Alkylreste oder R⁴-C(=O)-, wobei R⁴ für einen geradkettigen oder verzweigten C₁-C₂₅-Alkylrest steht, bedeuten und
R⁴ für geradkettige oder verzweigte C₁-C₁₄-Alkylreste steht, die keinen, einen, zwei oder mehrere Substituenten ausgewählt aus Vinyl-, -SH, substituiertem oder unsubstituiertem Phenyl-, Methacryloxy- und Isocyanato- aufweisen, oder für -R⁵-(S)ₓ-R⁵-Si(OR¹)(OR²)(OR³) steht, worin R¹, R² und R³ gleich oder verschieden sind und die gleichen Bedeutungen wie in Formel (II) besitzen, R⁵ für einen geradkettigen oder verzweigten C₁-C₁₄-Alkylenrest und x für eine Zahl von 1 bis 8 steht,
oder alternativ zur Kombination aus silikatischem Füllstoff und Silan der allgemeinen Formel (I) **20 bis 125 Gew.Teile**, bevorzugt **20 bis 110 Gew.Teile** ein, bereits mit einem Silan, bevorzugt der allgemeinen Formel (II) modifizierter silikatischer Füllstoff.

11. Vulkanisierbare Zusammensetzungen nach einem der Ansprüche 1-10 zusätzlich enthaltend
(4) ein oder mehrere weitere Polymere ausgewählt aus der Gruppe bestehend aus Kautschuken, bevorzugt Styrol-Butadien Kautschuk, Nitrilkautschuk, hydrierter Nitrilkautschuk, Ethylenvinylacetat-Copolymer, Ethylen-Propylen-Dien-Monomer Kautschuk, Ethylen Acrylat Kautschuk, Acrylat Kautschuke, Fluorkautschuke, Chloroprenkautschuke, Chloriertes Polyethylen (CM), Thermoplasten, bevorzugt Polyvinylchlorid, Polyamide, Polyimide, Polyether, Polyester, Polyphenylensulfid (PPS), und Polycarbonate, und Mischungen aus allen vorgenannten.

12. Vulkanisierbare Zusammensetzungen nach einem der Ansprüche 1-11 zusätzlich enthaltend
(5) halogenhaltige Verbindungen, bevorzugt Polychloropren in Mengen von 5-10 Gew.Teilen pro 100 Gew.Teilen der Komponente (1) und
(6) keine, eines oder mehrere weitere Kautschukadditive.

13. Verfahren zur Herstellung der vulkanisierbaren Zusammensetzungen nach einem der Ansprüche 1-12 durch Mischung der Komponenten (1), (2) und (3) und optional der Komponenten (4), (5) und (6).

14. Verfahren zur Herstellung von Vulkanisaten, indem man die vulkanisierbaren Zusammensetzungen nach einem der Ansprüche 1-12 der Vulkanisation unterwirft, bevorzugt bei Temperaturen im Bereich von 120°C bis 200°C, besonders bevorzugt von 140°C bis 190°C.

15. Vulkanisate erhältlich nach dem Verfahren gemäß Anspruch 14.
